## Europäisches Patentamt

## European Patent Office

## Office européen des brevets

(11) Veröffentlichungsnummer: **0 152 776**
**B1**

(12) # EUROPÄISCHE PATENTSCHRIFT

(45) Veröffentlichungstag der Patentschrift:
31.05.89

(51) Int. Cl.⁴: **F 16 L 57/00, B 65 D 59/06**

(21) Anmeldenummer: **85100559.5**

(22) Anmeldetag: **19.01.85**

(54) **Topfförmige Verschlusskappe aus Kunststoff für Rohre.**

(30) Priorität: **21.02.84 DE 8405215 U**

(43) Veröffentlichungstag der Anmeldung:
**28.08.85 Patentblatt 85/35**

(45) Bekanntmachung des Hinweises auf die Patenterteilung:
**31.05.89 Patentblatt 89/22**

(84) Benannte Vertragsstaaten:
**AT BE CH DE FR GB IT LI LU NL SE**

(56) Entgegenhaltungen:
**DE-A-3 031 687**
**DE-U-7 131 549**
**DE-U-8 207 410**
**US-A-1 839 448**
**US-A-1 853 945**
**US-A-2 073 389**
**US-A-3 744 528**
**US-A-4 079 756**
**US-A-4 210 179**

(73) Patentinhaber: **REHAU AG + Co, Rheniumhaus, D-8673 Rehau (DE)**

(72) Erfinder: **Jacob, Richard, Dr., Dr. Hans- Vogt-Strasse 15, D-8673 Rehau (DE)**

## Beschreibung

Die Erfindung betrifft eine topfförmige Verschlußkappe für Rohre, vorzugsweise Kunststoff-Rohre, wobei die Verschlußkappe als Blas-, Spritzguß- oder Tiefziehteil einseitig durch ein Bodenteil abgeschlossen ist und eine Topfwand besitzt, welche an ihrem bodenteilseitigen Ende derart nach innen gestülpt ist, daß sich unter Bildung eines zum Kappeninneren offenen, umlaufenden Abstandes über eine vorgegebene Tiefe eine zur Topfwand parallel verlaufende Innenwand ergibt, welche an ihrem einen Rand über einen den Abstand bestimmenden Steg mit der Topfwand einstückig verbunden ist und an ihrem sich zum Kappeninneren erstreckenden Ende das Bodenteil trägt.

Aus der Patentschrift US-A-3 744 528 ist eine derartige Verschlußkappe bekannt. Die äußere Topfwand und die dazu parallel verlaufende Innenwand sind flexibel gehalten und die Dicke beider umlaufenden Wände steigt von ihrem jeweils dünnsten Bereich kontinuierlich bis zu dem den Abstand bestimmenden Steg an. Das Rohrende wird demnach unter Verformung von Topfwand und Innenwand in dem dazwischenliegenden Spalt gehaltert, wobei beim Überschieben der Verschlußkappe über das Rohrende zunehmender Druck zur Verformung der Topfwand und der Innenwand ausgeübt werden muß. Hierin wird der Nachteil dieser bekannten Anordnung gesehen, denn beim Zusammentreffen von Plustoleranzen beim Rohrende und bei den Wanddicken der Verschlußkappe kann es zum Absprengen bzw. zum Bruch der beiden parallel verlaufenden Wände der Verschlußkappe kommen.

Aus der Deutschen Offenlegungsschrift DE-A-3 031 687 ist eine Vorrichtung zum Schutz der Endbereiche von Rohren gegen mechanische Beschädigungen bekannt, welche aus zwei parallel zueinander verlaufenden Hülsen besteht, die einseitig offen und an der anderen Seite durch ein Bodenteil miteinander verbunden sind.

Der Abstand zwischen den beiden Hülsen ist so bemessen, daß er der Dicke der Rohrwandung entspricht. Das Bodenteil selbst liebt im Einsatz an der Stirnfläche des Rohres an und deckt diese vollständig ab. In dem Bodenteil sind zur mechanischen Stabilisierung dieses Bereiches rippenförmige Erhöhungen eingebracht. Der Nachteil dieser bekannten Anordnung ist darin zu sehen, daß die bei der Rohrherstellung entstehenden Toleranzen nicht in ausreichendem Maße berücksichtigt werden können, da sich aus der Lehre dieser Erfindung ergibt, daß der Abstand zwischen den beiden Hülsen der Dicke der Rohrwandung entsprechen muß. Darüber hinaus können mit dieser bekannten Vorrichtung nur Rohre einer einzigen Druckstufe abgedeckt werden, so daß für die verschiedenen Druckstufen mit ihren verschiedenen Rohrwanddicken jeweils verschiedene Vorrichtungen geschaffen werden müssen. Dies verteuert die Arbeit mit dieser Vorrichtung erheblich.

Schließlich ist aus dem Deutschen Gebrauchsmuster DE-U-8 207 410.0 noch eine Schutzkappe für Rohrenden bekannt geworden, welche an einem der Rohrwandung zugewandten Kragenbereich vorstehende Kragenteile bildet, die kraftschlüssig an einem in radialer Richtung des Rohres versetzten Wandungsteil der Rohrwandung anliegen. Hierbei ist das in radialer Richtung des Rohrendes versetzte Wandungsteil die über den Umfang einer Rohrmuffe nach außen hinausragende Sickenwandung, welche durch die Umfangssicke für die Aufnahme des Gummi-Dichtringes gebildet ist. Die aus dieser Vorveröffentlichung bekannte Schutzkappe ist also nur für Rohre einsetzbar, welche eine Muffe und eine über den Muffenumfang hinausragende Sickenwandung aufweisen, da die vorstehenden Kragenteile der Schutzkappe hinter die Sickenwandung schnappen und dadurch die Schutzkappe auf dem Muffenende festlegen. Diese Schutzkappe ist also nur für Rohre mit Muffen und Sicken verwendbar.

Auf ein einfaches Spitzende eines Rohres ist diese Schutzkappe nicht aufsetzbar.

Hier setzt die Erfindung ein, die es sich zur Aufgabe gestellt hat, eine Schutzkappe anzugeben, die für alle Druckstufen eines Rohrdurchmessers und für alle Rohrmaterialien, Betriebsdrücke und Rohrenden verwendbar ist. Erfindungsgemäß wird dazu vorgeschlagen, daß die Topfwand und die Innenwand zylindrisch ausgebildet sind, und daß die Topfwand sowie der den Abstand A bildende Steg gesickte Bereiche aufweisen, und daß der Abstand A mindestens so groß ist, daß die Kappe für alle Druckstufen einer Rohrabmessung verwendbar ist.

Das wesentliche Merkmal der Erfindung ist eben diese Tatsache, daß die Kappe für alle Druckstufen eines Rohrdurchmessers verwendet werden kann, da sich bei den Druckstufen nur die Wanddicke ändert, während der Außendurchmesser der Rohre immer der gleiche ist. Bei der Verwendung der erfindungsgemäßen Kappe spielt der Werkstoff der abzudeckenden Rohrenden keine Rolle, da die betreffenden Rohre z. B. aus PVC, PE usw. insgesamt den gleichen Außendurchmesser aufweisen.

Es hat sich als vorteilhaft erwiesen, daß die gesickten Bereiche nach außen konkav und nach innen konvex ausgebildet sind. Zweckmäßig erscheint es, daß die Topfwand an ihrem freien, vom Bodenteil abgewandten Ende eine Aufkelchung besitzt.

Die erfindungsgemäße Kappe kann sowohl bei Muffenenden wie Klebe- und Steckmuffen innen in die Muffe eingesetzt werden als auch an Rohrspitzenden den äußeren Umfang umgreifen. Bei der Umgreifung des äußeren Umfangs von Rohrspitzenden wird der Vorteil genutzt, daß der Rohraußendurchmesser in diesen Fällen maßgebend und konstant ist.

Hier können also die verschiedenen Druckstufen mit ihrer unterschiedlichen Wanddicke von ein- und derselben Verschlußkappe übergriffen werden.

Bei der Verwendung zum Schutz von Muffenenden kann die erfindungsgemäße Verschlußkappe ebenfalls für die verschiedenen Druckstufen eingesetzt werden, da der Muffeninnendurchmesser hier maßgebend und konstant ist. Die in der Rohrwandung liegenden fertigungsbedingten Herstellungstoleranzen werden durch die erfindungsgemäß auf den Umfang verteilten gesickten Bereiche der Oberfläche der Verschlußkappe aufgefangen. Diese gesickten Bereiche haben zusätzlich die Aufgabe, die Belüftung der mit der erfindungsgemäßen Verschlußkappe ausgerüsteten Rohre zu gewährleisten. Hierfür dienen nicht nur die in der Topfwand befindlichen gesickten Bereiche, sondern zusätzlich auch die gesickten Bereiche in dem zwischen der Topfwand und der Innenwand befindlichen Steg. Diese Belüftungsmöglichkeit ist gegeben, gleichgültig ob die gesickten Bereiche in konkaver oder in konvexer Form zum Einsatz gelangen.

Die gesickten Bereiche können je nach Einsatzzweck auch nach außen konvex und nach innen konkav ausgebildet sein. Sie erstrecken sich vorteilhaft über die Länge der Topfwand bis zu einer am freien Ende der Topfwand angeformten Aufkelchung. Diese Aufkelchung dient der leichteren Einführung von Rohrspitzenden, bei denen die Verschlußkappe den äußeren Umfang übergreift. Beim Einsatz in aufgemufften Rohrenden, bei dem die Verschlußkappe innen in die Muffe eingesetzt wird, dient die Aufkelchung als Verschiebesicherung im Sinne einer Sperre für weiteres Einschieben nach innen.

Die nach innen zurückgezogene Innenwand mit dem Bodenteil schafft eine optimale Eingriffsöffnung beim Transport des mit der Verschlußkappe abgedeckten Rohres.

Die Erfindungsgemäße Verschlußkappe ergibt einen Abschluß der damit versehenen Rohre und wirkt damit gegen Verschmutzung bei gleichzeitig gegebener Belüftung durch die gesickten Oberflächenbereiche.

In der Zeichnung ist ein Ausführungsbeispiel der Verschlußkappe schematisch dargestellt; es zeigt:

Fig 1    die Verschlußkappe in Draufsicht.
Fig. 2   die Verschlußkappe in Seitenansicht, teilgeschnitten.
Fig. 3   die Verschlußkappe im Einsatz als Spitzendenabdeckung bei verschiedenen Druckstufen eines Rohraußendurchmessers.

Die dargestellte Draufsicht zeigt die Verschlußkappe 1 mit der Topfwand 2 und der Innenwand 4 sowie den beide Wände 2, 4 verbindenden Steg 42. In den Steg 42 und die Topfwand 2 sind die gesickten Bereiche 22, 23, 24, 25, 26, 27 eingebracht. Die Aufkelchung 29 bildet den unteren Abschluß.

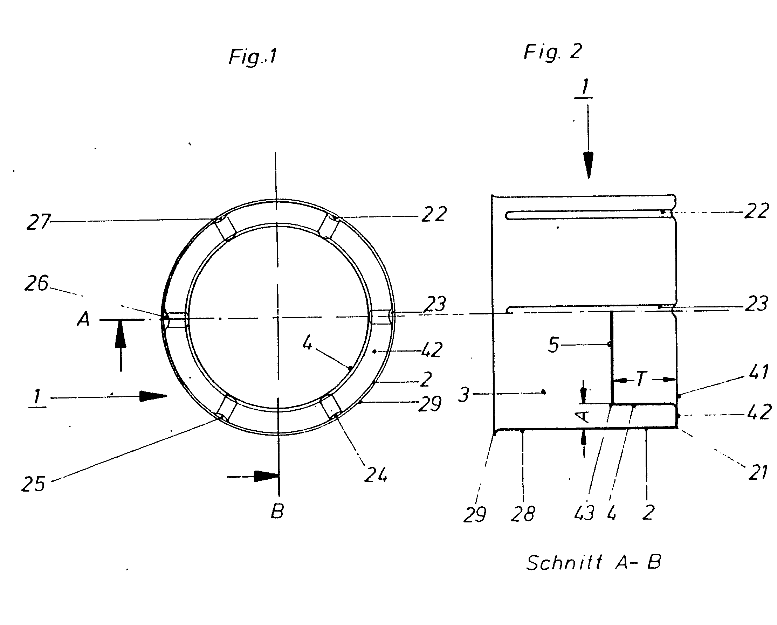

Fig. 2 zeigt die Verschlußkappe 1 in Seitenansicht, teilgeschnitten längs der Linie A - B aus Fig. 1. Im oberen Teil der Verschlußkappe sind die Einsickungen 22, 23 zu erkennen, die sich axial bis in den Bereich der Aufkelchung 29 am freien Ende 28 der Topfwand 2 erstrecken. Im unteren Bereich ist die Topfwand 2 mit ihrem freien Ende 28 und der Aufkelchung 29 zu erkennen. Am anderen freien Ende 21 verläuft die Topfwand 2 in den Steg 42, der seinerseits die Verbindung zur Innenwand 4 an deren oberen freien Ende 41 bildet. Die Breite des Steges 42 bestimmt den Abstand A der Topfwand von der Innenwand. Dieser Abstand A wird durch die Wanddicke der abzudeckenden Rohre vorgegeben, wobei hier die Wanddicken aller Druckstufen eines Rohraußendurchmessers oder Muffeninnendurchmessers gemeint sind. Am unteren freien Ende 43 der Innenwand 4 ist das Bodenteil 5 angeformt.

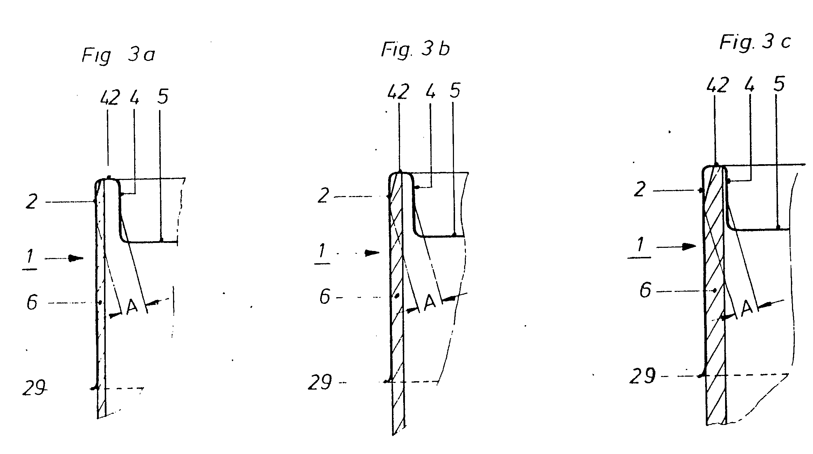

In Fig. 3 sind drei verschiedene Anwendungen der neuerungsgemäßen Verschlußkappe 1 als Spitzendenabdeckung bei verschiedenen Druckstufen eines Rohres 6 dargestellt.

Fig. 3 A zeigt ein Rohrspitzende der Abmessung 110 mm x 3,2 mm mit der Abdeckung durch die neuerungsgemäße Verschlußkappe 1 im Teilschnitt. Aus der gezeigten Darstellung wird deutlich, daß der Abstand A zwischen der Topfwand 2 und der Innenwand bei dieser Druckstufe nicht im möglichen Umfang ausgenutzt wird. Die äußere Oberfläche des Rohres 6 liegt an der inneren Oberfläche der Topfwand 2 an, während die Innenwand 4 im Abstand von der Innenwand des Rohres 6 durch den Steg 42 gehalten ist. Die Verschlußkappe kann im gezeigten Beispiel einen Außendurchmesser von 110 mm aufweisen. Auf diese Weise wird ein fester Sitz der Verschlußkappe 1 auf dem Spitzende des Rohres 6 gewährleistet, wobei die Einsickungen 22, 23, 24, 25; 26, 27 als Toleranzausgleich und Belüftungsmöglichkeit wirken.

Fig. 3 B zeigt den gleichen Einsatz der Verschlußkappe 1, diesmal jedoch bei einem Rohr der Abmessung 110 mm x 5,3 mm. Der Außendurchmesser der Verschlußkappe 1 ist bei 110 mm geblieben. Aus der Darstellung wird deutlich, daß die erhöhte Druckstufe in einer Wandverdickung des Rohres 6 zum Ausdruck kommt. Der durch den Steg 42 vorgegebene Abstand A zwischen der Topfwand 2 und der innenwand 4 ist durch das Spitzende des Rohres 6 mehr ausgefüllt als bei der Darstellung in Fig. 3 A.

In Fig. 3 C ist ein Mohr der Abmessung 110 mm x 8,2 mm verwendet worden. Hier wird deutlich, daß durch die wiederum erhöhte Druckstufe die Wanddicke des Rohres so zugenommen hat, daß der durch den Steg 42 vorgegebene Abstand A zwischen der Topfwand 2 und der Innenwand 4 nahezu ausgefüllt ist.

Die Darstellungen Fig. 3 A bis Fig. 3 C zeigen deutlich, daß die neuerungsgemäße Endkappe für alle Druckstufen einer vorgegebenen Rohrabmessung verwendet werden kann. Für den Einsatz der neuerungsgemäßen Verschlußkappe 1 in aufgemufften Rohrenden gilt das gleiche wie der in Fig. 3 gezeigten Darstellung bei Rohrspitzenden mit der einzigen Ausnahme, daß beim Einsatz in aufgemufften Rohrenden die neuerungsgemäße Verschlußkappe nicht - wie in Fig. 3 gezeigt - von außen über das Rohrende gestülpt wird, sondern innen in die Muffe eingesetzt wird.

## Patentansprüche

1. Topfförmige Verschlußkappe für Rohre, vorzugsweise Kunststoff-Rohre, wobei die Kappe (1) als Blas-, Spritzguß-, oder Tiefziehteil einseitig durch ein Bodenteil (5) abgeschlossen ist und eine Topfwand (2) besitzt, welche an ihrem bodenteilseitigen Ende (21) derart nach innen gestülpt ist, daß sich unter Bildung eines zum Kappeninneren (3) offenen, umlaufenden Abstandes (A) über eine vorgegebene Tiefe (T) eine zur Topfwand (2) parallel verlaufende Innenwand (4) ergibt, welche an ihrem einen Rand (41) über einen den Abstand (A) bestimmenden Steg (42) mit der Topfwand (2) einstückig verbunden ist und an ihrem sich zum Kappeninneren (3) erstreckenden Ende (43) das Bodenteil (5) trägt, dadurch gekennzeichnet, daß die Topfwand (2) und die Innenwand (4) zylindrisch ausgebildet sind, und daß die Topfwand (2) sowie der den Abstand (A) bildende Steg (42) gesickte Bereiche (22, 23, 24, 25, 26, 27) aufweisen, und daß der Abstand (A) mindestens so groß ist, daß die Kappe (1) für alle Druckstufen einer Rohrabmessung verwendbar ist.

2. Verschlußkappe nach Anspruch 1, dadurch gekennzeichnet, daß die gesickten Bereiche (22, 23, 24, 25, 26, 27) nach außen konkav und nach innen konvex ausgebildet sind.

3. Verschlußkappe nach Anspruch 1, dadurch gekennzeichnet, daß die Topfwand (2) an ihrem freien, vom Bodenteil (5) abgewandten Ende (28) eine Aufkelchung (29) besitzt.

## Claims

1. Cup-shaped sealing cap for pipes, preferably plastic pipes, whereby the sealing cap (1) is a blow moulding, injection moulding or thermoformed part consisting of a base section (5) at one end and a cup wall (2) which, at the end (21) nearest to the base section, is turned inwards in such a way that an inner wall (4), which is open to the inside of the cap (3), is formed both parallel to and at a concentric distance (A) to the cup wall (2) over a given depth (T), and which at one edge (41) is joined to the cup wall (2) by a rib (42) which determines the distance (A) and which also supports the base section (5) with its end (43) facing to the inside of the cap (3), characterized in that the cup wall (2) and the inner wall (4) are cylindrical in shape and that the cup wall and the rib (42) which maintains the distance (A) have beaded areas (22, 23, 24, 25, 26, 27) and that the distance (A) is at least large enough to allow the cap (1) to be used for all pressure stages of a pipe size.

2. Sealing cap in accordance with claim 1, characterized in that the beaded areas (22, 23, 24, 25, 26, 27) are concave to the outside and convex to the inside.

3. Sealing cap in accordance with claim 1, characterized in that the free end (28) of the cup wall (2) away from the base section (5) has a lip (29).

## Revendications

1. Couvercle de fermeture en forme de pot pour toyaux, de préférence des toyaux en matière plastique, le chapeau (1), pièce soufflée, moulée ou formée sous vide, est obturé d'un côté par un fond (5) et possède une paroi de pot (2), laquelle a des moulures à l'extrémité du fond (21) tournées vers l'intérieur de telle sorte qu'il y ait une paroi intérieure (4) parallèle à la paroi du pot (2) en formant un espace (A) tout autour ouvert vers l'intérieur du chapeau (3) surplombant une profondeur prescrite (T). Cette paroi intérieure est reliée en une pièce à la paroi du pot (2) par une nervure (42) déterminant l'espace (A) à son rebord et qui porte le fond (5) à son extrêmité (43) qui s'avance jusqu'à l'intérieur du chapeau (3), caractérisé par le fait que la paroi du pot (2) et la paroi intérieure (4) sont cylindriques et par le fait que la paroi du pot (2) ainsi que la nervure (42) constituant l'espace (A) aient des zones de moulures (22, 23, 24, 25, 26, 27) et par le fait que l'espàce (A) soit dimensionné de telle sorte que le chapeau (1) soit utilisable pour tous les degrés de pression que peut supporter le diamètre du tuyau.

2. Convercle de fermeture selon la revendication 1, caractérisé par le fait que les zones de moulures (22, 23, 24, 25, 26, 27) soient concaves vers l'extérieur et convexes vers l'intérieur.

3. Couvercle de fermeture selon la revendication 1, caractérisé par le fait que le paroi du pot (2) possède une encoche en forme de coupe (29) à l'extrêmité (28) libre opposée au fond (5).

Fig..1

Fig. 2

Schnitt A- B

Fig. 3 c

Fig. 3 b

Fig 3 a

3